# FASCICULE DE BREVET EUROPEEN

(11) **EP 3 083 342 B1**
(45) Date de publication et mention de la délivrance du brevet: **15.05.2019**
(21) Numéro de dépôt: 14815745.6
(22) Date de dépôt: 19.12.2014
(51) Int. Cl.: B60R 25/24, G07C 9/00

(54) **SYSTEME MAINS-LIBRES POUR VEHICULES AUTOMOBILES**
FREISPRECHSYSTEM FÜR KRAFTFAHRZEUGE
HANDS-FREE SYSTEM FOR MOTOR VEHICLES

(30) Priorité: 20.12.2013 FR 1303036
(43) Date de publication de la demande: 26.10.2016
(73) Titulaire: Valeo Comfort and Driving Assistance, 94046 Créteil Cedex (FR)
(72) Inventeur: MENARD, Eric, F-94046 Créteil Cédex (FR); MUSAT, Ciprian, F-94046 Créteil Cédex (FR); LECONTE, Eric, F-94046 Créteil Cédex (FR)
(86) Numéro de dépôt international: PCT/EP2014/078741
(87) Numéro de publication internationale: WO 2015/091949

(56) Documents cités:
- EP-A2- 1 505 734
- DE-A1-102004 048 329
- DE-A1-102008 052 370
- US-A1- 2010 264 940

## Description

### DOMAINE TECHNIQUE DE L'INVENTION

La présente invention concerne un système d'accès mains-libres à un véhicule automobile, et un procédé associé.

Elle trouve une application particulière mais non limitative dans le domaine des systèmes d'accès mains-libres pour véhicule automobile.

### ARRIÈRE-PLAN TECHNOLOGIQUE DE L'INVENTION

Un tel système d'accès mains-libres, connu de l'homme du métier, permet de détecter la présence d'un objet tel qu'une main d'un utilisateur du véhicule automobile lorsqu'il approche d'une poignée d'ouvrant en vue d'une ouverture de l'ouvrant. La détection de l'approche de la main d'un utilisateur entraîne la commande par une unité centrale du véhicule du lancement d'une interrogation mains-libres à destination d'un identifiant portée par l'utilisateur. Si suite à cette détection, un identifiant autorisé répond à cette interrogation, l'unité de centrale du véhicule commande le déverrouillage du véhicule. A cet effet, le système mains-libres utilise un organe de détection disposé dans la poignée d'ouvrant qui mesure le signal représentatif d'une main qui s'approche de la poignée à une certaine distance. Afin d'éviter de lancer des interrogations intempestives, il est nécessaire de définir un niveau de sensibilité pour le système mains-libres, c'est-à-dire que le système ne procédera à l'interrogation mains-libres que si l'organe de détection détecte un signal dépassant une valeur seuil correspondant à la présence d'une main d'un utilisateur à une distance maximum prédéterminée.

Le réglage de cette sensibilité doit prendre en compte deux facteurs principaux. Le premier élément consiste à ne prendre en compte que détections correspondant à l'approche d'une main suffisamment proche de la poignée. On peut ainsi éviter ainsi les interrogations intempestives du système mains-libres pour des évènements ne correspondant pas une intention d'accès au véhicule.

Néanmoins si la sensibilité est réglée à un niveau trop fort c'est-à-dire correspondant à une valeur seuil en rapport à une distance proche du contact entre la main et la poignée, le système mains-libres n'aura pas le temps de réaliser toute la séquence d'interrogation mains-libres et déverrouiller l'ouvrant lorsque l'utilisateur tirera sur la poignée. En conséquence, l'ouvrant ne pourra pas s'ouvrir. C'est ce qu'on appelle communément l'effet de mur.

DE 10 2004 048 329 A1 divulgue un procédé et un système d'accès mains-libres à un véhicule automobile.

Dans ce contexte, la présente invention vise à résoudre les inconvénients précédemment mentionné et notamment de proposer un système mains-libres qui s'adapte aux situations pour permettre de limiter à la fois l'effet de mur tout en économisant les ressources énergétiques du véhicules en limitant les interrogations intempestives.

### DESCRIPTION GENERALE DE L'INVENTION

A cette fin l'invention propose un système d'accès mains-libres à un véhicule automobile selon la revendication 1.

Ainsi, comme on va le voir en détail ci-après, le fait d'adapter le niveau de sensibilité systèmes mains-libres en fonction de séquences d'événements prédéterminées, va permettre de s'adapter aux situations pour permettre de limiter à la fois l'effet de mur tout en économisant les ressources énergétiques du véhicules en limitant les interrogations intempestives.

En présence de la séquence :
- la sensibilité est réglée sur un premier niveau de sensibilité haute ;
- détection d'un signal supérieur à la première valeur seuil correspondant à la sensibilité haute;
l'organe de commande fait passer la sensibilité du premier niveau de sensibilité haute au deuxième niveau de sensibilité basse.

Selon des modes de réalisation non limitatifs, le système mains libres peut comporter en outre une ou plusieurs caractéristiques supplémentaires parmi les suivantes:

Le passage du premier niveau de sensibilité haute au deuxième niveau de sensibilité basse est effectué si un premier temps déterminé a été dépassé sans que le signal mesuré ne dépasse une troisième valeur seuil.

En présence de la séquence :
- dépassement d'un deuxième temps prédéterminé sans franchissement de la première valeur seuil correspondant à la sensibilité haute;
l'organe de commande fait passer la sensibilité du deuxième niveau de sensibilité basse au premier niveau de sensibilité haute.

En présence de la séquence :
- détection du franchissement de la deuxième valeur seuil,
- dépassement d'un premier temps prédéterminé sans franchissement d'une troisième valeur seuil ;
l'organe de commande laisse la sensibilité au deuxième niveau de sensibilité basse.

Selon l'invention, en présence de la séquence :
- détection du franchissement de la deuxième valeur seuil,
- détection du franchissement d'une troisième valeur seuil,
l'organe de commande fait passer la sensibilité du deuxième niveau de sensibilité basse au premier niveau de sensibilité haute.

L'organe de commande est en outre apte à effectuer le déverrouillage du véhicule automobile.

La première valeur seuil correspond à une première distance par rapport à la poignée d'ouvrant, la deuxième valeur seuil correspond à une deuxième distance par rapport à la poignée d'ouvrant, la première distance étant supérieure à la deuxième distance.

La troisième valeur seuil correspond à une troisième distance par rapport à la poignée d'ouvrant et est inférieure ou égale à la deuxième distance.

Ledit organe de détection est composé d'une unique électrode adaptée pour recouvrir une face intérieure de ladite poignée d'ouvrant du véhicule automobile.

Le signal est représentatif d'une mesure de capacité.

Le premier niveau de sensibilité haute correspond à un signal de faible valeur et le deuxième niveau de sensibilité basse correspond à un signal de forte valeur.

La première valeur seuil est inférieure à la deuxième valeur seuil.

La deuxième valeur seuil est inférieure ou égale à la troisième valeur seuil.

Ledit organe de commande est en outre apte à réveiller des calculateurs du véhicule automobile lorsque le signal mesuré dépasse la valeur de seuil correspondant au niveau de sensibilité sur lequel est disposé système mains-libres.

Ledit organe de commande est en outre apte à éteindre lesdits calculateurs si un troisième temps prédéterminé est dépassé sans franchissement de ladite troisième valeur seuil.

Il est également proposé un procédé de réglage du niveau de sensibilité pour un système d'accès mains-libres à un véhicule automobile, ledit système d'accès mains-libres comprenant :
- un organe de commande disposé dans le véhicule automobile ;
- un organe de détection disposé dans une poignée d'ouvrant du véhicule automobile, ledit organe de détection :
   - étant connecté audit organe de commande ;
   - étant apte à mesurer un signal représentatif de l'approche d'une main ;
- un niveau de sensibilité pour lequel est définie une valeur seuil correspondante ;
- ledit organe de commande étant apte à commander le lancement d'une interrogation mains-libres lorsque le signal mesuré dépasse la valeur seuil correspondant au niveau de sensibilité.

Le procédé se caractérise en ce qu'il comprend :
- la modification du niveau de sensibilité en réponse à une séquence d'événements prédéterminée, ledit système d'accès mains-libres comprenant au moins deux niveaux de sensibilité, un premier niveau de sensibilité haute, et un deuxième niveau de sensibilité basse.

### BREVE DESCRIPTION DES FIGURES

L'invention et ses différentes applications seront mieux comprises à la lecture de la description qui suit et à l'examen des figures qui l'accompagnent.
- la figure 1 représente un schéma d'un système d'accès mains-libres selon un mode de réalisation non limitatif de l'invention ;
- la figure 2 représente un schéma d'un organigramme d'un procédé de réglage mis en oeuvre par le système mains-libres de la figure 1.

### DESCRIPTION DE MODES DE REALISATION DE L'INVENTION

Les éléments identiques, par structure ou par fonction, apparaissant sur différentes figures conservent, sauf précision contraire, les mêmes références.

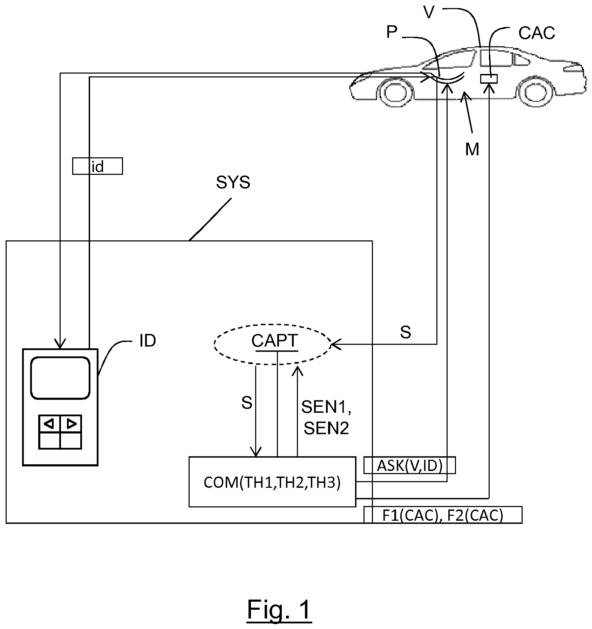

Le système d'accès mains-libres SYS à un véhicule automobile V est illustré à la figure 1.

Par système d'accès mains-libres SYS, on entend le système comprenant un identifiant utilisateur ID couramment appelé badge qui permet à un utilisateur du véhicule d'accéder audit véhicule, un organe de détection, et un organe de commande.

Dans la suite de la description, on utilisera indifféremment les termes niveau de sensibilité haute ou premier niveau de sensibilité pour le premier niveau de sensibilité haute SEN1, et niveau de sensibilité basse ou premier niveau de sensibilité pour le premier niveau de sensibilité basse SEN2.

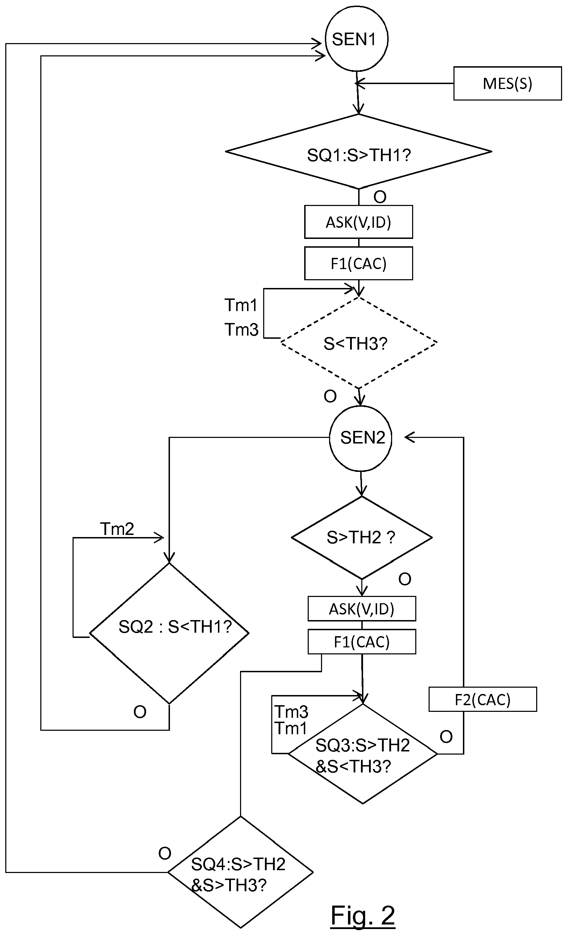

Ainsi, dans un mode de réalisation non limitatif, le système mains-libres SYS comprend :
- un organe de commande COM disposé dans le véhicule automobile V ;
- un organe de détection CAPT disposé dans une poignée d'ouvrant P du véhicule automobile V, ledit organe de détection :
   - étant connecté à un organe de commande COM ;
   - étant apte à mesurer un signal S représentatif de l'approche d'une main M ;
- un niveau de sensibilité SEN pour lequel est définie une valeur seuil TH correspondante ;
- ledit organe de commande COM étant apte à lancer une interrogation mains-libres auprès du véhicule automobile V lorsque le signal S mesuré dépasse la valeur seuil TH correspondant au niveau de sensibilité SEN (illustré ASK (V, ID) sur les figures 1 et 2).
ledit système mains-libres SYS comprend comprend au moins deux niveaux de sensibilité SEN1, SEN2, un premier niveau de sensibilité haute SEN1, et un deuxième niveau de sensibilité basse SEN2. L'organe de détection CAPT est couramment appelé capteur.

L'organe de commande COM est apte à modifier le niveau de sensibilité SEN1, SEN2 du système mains-libres SYS, en réponse à une séquence d'événements prédéterminée SQ.

Dans un mode de réalisation non limitatif, l'organe de commande COM est en outre apte à effectuer le déverrouillage d'un ouvrant du véhicule automobile V.

Dans un exemple non limitatif, l'organe de commande COM est un circuit intégré de commande et plus particulièrement un microcontrôleur.

Dans un mode de réalisation non limitatif, ledit organe de commande COM est en outre apte à réveiller des calculateurs CAC du véhicule automobile V lorsque le signal mesuré S dépasse la valeur de seuil TH1, TH2 correspondant au niveau de sensibilité sur lequel est disposé le système mains-libres SYS.

Dans un mode de réalisation non limitatif, la première valeur seuil TH1 correspond à une première distance d1 par rapport à la poignée d'ouvrant P, la deuxième valeur seuil TH2 correspond à une deuxième distance d2 par rapport à la poignée d'ouvrant P, la première distance d1 étant supérieure à la deuxième distance d2. Dans un exemple non limitatif, la première distance d1 est égale à 10mm et la deuxième distance d2 est égale à 4mm.

Dans un mode de réalisation non limitatif, ledit capteur CAPT est à technologie capacitive et le signal S est représentatif d'une mesure de capacité.

A cet effet, l'organe de détection CAPT forme une capacité. Cet organe de détection CAPT permet de détecter la présence d'une main M dans une poignée P pour effectuer le déverrouillage de la poignée d'ouvrant P.

Dans un mode de réalisation non limitatif, l'organe de détection CAPT comprend un seul jeu d'électrodes.

Dans un premier mode de réalisation non limitatif, le jeu d'électrode(s) CAPT comprend deux électrodes (non représentées). Dans ce mode, l'organe de détection est dit organe à capacité mutuelle.

Dans un deuxième mode de réalisation non limitatif illustrée à la figure 1, l'organe de détection CAPT comprend une seule électrode qui est utilisée avec une masse. Cette unique électrode est plane et adaptée pour recouvrir une face intérieure d'une poignée d'ouvrant (coffre, portières) du véhicule automobile. Dans ce mode, l'organe de détection CAPT est dit organe à capacité de surface.

L'utilisation de tel(s) jeu(x) d'électrode(s) étant bien connue de l'homme du métier, elle n'est pas décrite plus en détail ici.

Dans la suite de la description, on prend comme exemple non limitatif un organe de détection CAPT capacitif et un jeu d'électrode(s) comprenant une unique électrode comme organe de détection CAPT. Dans cet exemple non limitatif, plus on s'approche de la poignée d'ouvrant, plus la valeur du signal S augmente. Ainsi, le premier niveau de sensibilité haute SEN1 correspond à un signal S (ici une capacité) de faible valeur Sf et le deuxième niveau de sensibilité basse SEN2 correspond à un signal S (ici une capacité) de forte valeur SF.

Comme on va le voir ci-après, le dispositif de commande COM va lancer une interrogation mains-libres dès que le seuil correspondant au niveau de sensibilité sur lequel est disposé le système mains-libres SYS est franchi.

De cette manière système mains-libres SYS se donne les moyens d'anticiper l'accès d'un utilisateur au véhicule si bien sur un identifiant autorisé est au voisinage du véhicule.

D'autre part, le dispositif de commande COM va modifier le niveau de sensibilité à un niveau de sensibilité basse SEN2 et ceci afin de considérer la première détection comme un évènement intentionnel comme par exemple une première goutte de pluie. Le passage au niveau de basse sensibilité SEN2 va permettre d'écrêter les signaux S relatifs à des gouttes de pluie ultérieures. C'est-à-dire que bien que détectées par l'organe de détection CAPT, chaque goutte de pluie ne provoquera pas le lancement d'interrogation par le système mains-libres, ce lancement n'étant opéré que si un signal S mesuré dépasse la deuxième valeur seuil TH2 correspondante.

Le fonctionnement du système mains-libres est décrit plus en détail ci-après en référence à la figure 2.

On notera que le système mains-libres SYS est initialisé au premier niveau de sensibilité SEN1. Par ailleurs, la mesure du signal S s'effectue régulièrement par l'organe de détection CAPT (illustré MES(S)).

Dans un mode de réalisation non limitatif, la période de mesure se situe entre 4ms et 20ms.

Lorsque ledit système mains-libres SYS est disposé sur le premier niveau de sensibilité SEN1 et qu'il y a une détection d'un signal S supérieur à la première valeur seuil TH1, le dispositif de commande COM lance une interrogation mains libres.

En effet lorsque le signal S est supérieur à la première valeur seuil TH1, cela signifie que l'organe de détection CAPT a mesuré un signal S représentatif équivalent à l'approche d'une main à la première distance d1 de la poignée d'ouvrant P du véhicule V.

Cette interrogation mains-libres est un échange de communication à entre le véhicule V et le badge ID en vue d'opére un déverrouillage du véhicule si un badge ID autorisé à accéder au véhicule V a été identifié.

On notera que la première distance d1 est une distance limite maximum de détection de l'approche d'une main de la poignée et correspond à un temps limite minimum pour effectuer l'interrogation mains-libres avant que l'utilisateur ne tire la poignée en vue d'une ouverture de l'ouvrant.

On alloue ainsi un temps suffisant pour le dialogue mains-libres afin d'éviter « l'effet de mur ».

On rappelle que le dialogue mains-libres s'effectue comme suit, de manière connue de l'homme du métier.

Lorsque l'organe de commande COM détecte qu'il existe un franchissement d'une valeur seuil TH correspondant au niveau de sensibilité sur lequel est positionné le système mains-libres SYS, il lance une interrogation mains-libres à destination d'un badge ID. Cette interrogation est généralement effectuée par une antenne disposée dans le véhicule. De manière avantageuse on peut prévoir de disposer une antenne d'interrogation dans chaque poignée. L'antenne envoie une demande d'identification auprès du badge ID. Ce dernier renvoie à ladite antenne son identité ID.

On notera que le signal S représentatif d'une goutte de pluie lorsqu'elle ruisselle sur la poignée P est généralement au moins équivalent au signal S représentatif d'une main M à la distance d1.

Ainsi, bien qu'il ne s'agisse pas de l'approche d'une main le signal S atteint ou dépasse la première valeur seuil TH1, ce qui a pour conséquence de lancer quand même l'interrogation mains-libres. Il s'agit donc d'une interrogation non désirée.

Par ailleurs, lorsque ledit le système mains-libres SYS est disposé sur le premier niveau de sensibilité SEN1 et qu'il y a une détection du signal S supérieur à la première valeur seuil TH1, ledit organe de commande COM réveille les calculateurs CAC du véhicule automobile V. Cela permet aux calculateurs de pouvoir être activés très rapidement lorsque le véhicule démarre. Au démarrage, l'utilisateur n'a donc pas à attendre le réveil des calculateurs CAC. Dans des exemples non limitatifs, les calculateurs CAC sont :
- le contrôle moteur du véhicule ;
- le calculateur de confort véhicule pour la climatisation et le réglage du siège conducteur ;
- l'ESP (« Electro-Stabilisateur programmé ») pour corriger les trajectoires etc.

Nous allons maintenant détailler l'adaptabilité du système mains-libres à différentes séquence d'événements SQ.
1) lorsqu'une première séquence SQ1 dans laquelle :
   - ledit système mains-libres SYS est disposé sur le premier niveau de sensibilité SEN1 ;
   - il y a une détection d'un signal S supérieur à une première valeur seuil TH1 ;
l'organe de commande COM fait passer le système mains-libres SYS du premier niveau de sensibilité SEN1 au deuxième niveau de sensibilité SEN2.

La passage au deuxième niveau de sensibilité SEN2 va permettre de filtrer les signaux S représentatifs des gouttes de pluie

On notera que la deuxième valeur seuil TH2 correspond au deuxième niveau de sensibilité SEN2, et correspond à une deuxième distance d2 plus petite que la première distance d1 et permet de détecter une main M qui est plus proche de la poignée d'ouvrant du véhicule V. Dans l'exemple non limitatif pris, le signal S d'une main M qui était à la première distance d1 et qui s'est encore plus rapproché de la poignée P augmente.

En effet, plus la main M se rapproche de la poignée P du véhicule V, plus le signal S (qui est une capacité) est grand. Aussi, dans un mode de réalisation non limitatif, la deuxième valeur seuil TH2 est supérieure à la première valeur seuil TH1.

C'est cette deuxième valeur seuil TH2 qui va permettre d'écrêter les signaux S relatifs aux gouttes de pluie, puisque de tels signaux S ne seront jamais supérieurs à ladite deuxième valeur seuil TH2, correspondant à l'approche d'une main à la distance d2.

Dans un mode de réalisation non limitatif (illustré dans un losange en pointillés sur la figure 1), le passage du premier niveau de sensibilité haute SEN1 au deuxième niveau de sensibilité basse SEN2 est effectué si un premier temps déterminé Tm1 a été dépassé sans qu'un signal mesuré S ne dépasse une troisième valeur seuil TH3.

Cette troisième valeur seuil TH3 correspond à une troisième distance d3 plus petite ou égale à la deuxième distance d2 et donc permet de détecter une main M encore plus proche de la poignée d'ouvrant du véhicule V.

Cette dernière valeur d3 ne permet a priori plus de douter de l'intention d'un utilisateur d'ouvrir le véhicule V

Dans le cas d'un dépassement du seuil TH3, le système mains-libres SYS demeure sur le premier niveau de sensibilité haute SEN1.

Dans un exemple de réalisation non limitatif, le premier temps déterminé Tm1 (appelé « timeout » en anglais) est compris entre 20ms et 30ms.

Ainsi, au lieu de passer de suite en sensibilité basse SEN2, on attend pendant le temps Tm1 de voir si le signal mesuré ne dépasse pas TH3.

Comme on le verra par la suite, le dépassement de la valeur seuil TH3 correspond à une main qui a l'intention d'entrer en contact avec la poignée P et est donc considérée par le système mains libres comme une main entrant en contact avec la poignée. Dans le cas où la main entre en contact avec la poignée, on évite d'effectuer deux basculements inutiles : basculement du niveau de sensibilité haute SEN1 au niveau de sensibilité basse SEN2, basculement du niveau de sensibilité basse SEN2 au niveau de sensibilité haute SEN1. En effet, comme on le verra par la suite (description de la séquence SQ4), lorsqu'une main entre en contact avec la poignée P, on revient au niveau de sensibilité haute SEN1.

Suite à la détection de la première séquence SQ1, lorsque l'organe de détection CAPT est sur le niveau de sensibilité basse SEN2, le système mains-libres SYS va détecter la présence ou non des séquences suivantes SQ2, SQ3, SQ4 et en déduire s'il s'est arrêté de pleuvoir ou si la main n'est plus à proximité du véhicule, ou encore si une main a touché la poignée d'ouvrant P du véhicule V ou non.

Les différentes séquences SQ2, SQ3 et SQ4 sont décrites ci-dessous.

2) Lorsque le système mains-libres SYS au niveau de sensibilité basse SEN 2 est en présence de la deuxième séquence SQ2 suivante :
- dépassement d'un deuxième temps prédéterminé Tm2 sans franchissement de la première valeur seuil TH1 ;
l'organe de commande COM fait passer l'organe le système mains-libres SYS du deuxième niveau de sensibilité SEN2 au premier niveau de sensibilité SEN1.

Dans un mode de réalisation non limitatif, le deuxième temps déterminé Tm2 (appelé « timeout » en anglais) est d'une dizaine de secondes. Dans un exemple non limitatif, il est égal à 60 secondes.

Ainsi, on s'assure pendant une durée Tm2 que le signal S mesuré n'est pas redescendu en dessous de la valeur de seuil TH1.

La vérification de cette deuxième séquence SQ2 permet de vérifier qu'il ne pleut plus ou qu'il n'y a plus de main à proximité de la poignée P. Le signal S est repassé en dessous de la première valeur seuil TH1. Dans ce cas on repasse dans le premier niveau de sensibilité SEN1.

Par la suite, la première séquence SQ1 peut à nouveau se présenter.

3) Lorsque le système mains-libres SYS au niveau de sensibilité basse SEN 2 est en présence d'une troisième séquence SQ3 qui est la suivante :
- détection du franchissement de la deuxième valeur seuil TH2,
- dépassement du premier temps prédéterminé Tm1 (de l'ordre de 20ms à 30ms dans un exemple non limitatif) sans franchissement d'une troisième valeur seuil TH3 ;
l'organe de commande COM laisse le système mains-libres SYS au deuxième niveau de sensibilité SEN2.

On rappelle que, à ce niveau de valeur seuil TH2, le signal S d'une goutte de pluie lorsqu'elle ruisselle sur la poignée P est, dans l'exemple pris, inférieur au signal S de la main qui s'approche la poignée à la distance d2, ledit signal S d'une goutte de pluie sera donc toujours inférieur à la deuxième valeur seuil TH2.

On notera que lorsque ledit système mains-libres SYS est placé sur le deuxième niveau de sensibilité SEN2 et dès qu'il y a une détection du signal S supérieur à la deuxième valeur seuil TH2, le dispositif de commande COM lance une interrogation mains libres, autrement dit il lance ladite interrogation uniquement lorsqu'il existe une main à proximité de la poignée P, c'est-à-dire à une distance inférieure ou égale à d2.

Ainsi, grâce à la comparaison avec cette deuxième valeur de seuil TH2, on évite de lancer des interrogations mains-libres lorsqu'il n'existe que des gouttes de pluie.

A ce moment, si le badge ID a été identifié et autorisé par le véhicule V lors de l'interrogation mains-libres qui a été lancée, l'organe de commande COM déverrouille le véhicule automobile V.

De même, dans un mode de réalisation non limitatif, lorsque ledit système mains-libres SYS est disposé sur le deuxième niveau de sensibilité SEN2 et qu'il y a une détection du signal S supérieur à la deuxième valeur seuil TH2, ledit organe de commande COM réveille les calculateurs CAC du véhicule automobile V (illustré F1 (CAC)).

Cependant, ledit organe de commande COM éteint lesdits calculateurs CAC si un troisième temps prédéterminé Tm3 est dépassé sans franchissement de ladite troisième valeur seuil TH3.

Dans un exemple de réalisation non limitatif, le troisième temps prédéterminé TH3 est égal à 100ms (illustré F2(CAC)).

On notera que la troisième valeur seuil TH3 correspond à une troisième distance d3 inférieure ou égale à la deuxième distance d2 et permet de détecter une main qui a l'intention d'entrer en contact avec la poignée d'ouvrant P du véhicule V et qui est donc considérée par le système mains-libres SYS comme une main entrant en contact.

Dans un exemple de réalisation non limitatif, la troisième distance d3 est égale à 3mm. On considère qu'à cette distance, la main va saisir la poignée.

Dans l'exemple non limitatif pris, le signal S de la main qui s'approche à une distance d2 a une valeur inférieure au signal S de la même main qui s'approche d'une distance d3 de la poignée P

Aussi, dans un mode de réalisation non limitatif, la deuxième valeur seuil TH2 est inférieure ou égale à la troisième valeur seuil TH3. Dans l'exemple pris, la deuxième valeur seuil TH2 est inférieure à la troisième valeur seuil TH3.

Après la vérification de cette séquence SQ3, on reste au deuxième niveau de sensibilité SEN2.

4) Lorsque le système mains-libres SYS au niveau de sensibilité basse SEN 2 est en présence d'une quatrième séquence SQ4 suivante :
- détection du franchissement de la deuxième valeur seuil TH2,
- détection du franchissement d'une troisième valeur seuil TH3,
l'organe de commande COM fait passer le système mains-libres SYS du deuxième niveau de sensibilité SEN2 au premier niveau de sensibilité SEN1.

La vérification de cette quatrième séquence SQ4 signifie que l'utilisateur du véhicule a vraisemblablement saisi la poignée pour entrer dans le véhicule. On peut donc réinitialiser le système dans sa sensibilité d'origine.

Le système d'accès mains-libres SYS selon l'invention permet ainsi de mettre en oeuvre un procédé réglage du niveau de sensibilité SEN pour un système d'accès mains-libres SYS à un véhicule automobile V.

Bien entendu la description de l'invention n'est pas limitée aux modes de réalisation et aux exemples décrits ci-dessus.

Dans un autre mode de réalisation non limitatif, ledit organe de détection CAPT est composé de deux électrodes.

Dans un mode de réalisation non limitatif, l'organe de détection CAPT permet de mesurer des signaux S de plus en plus petits au fur et à mesure qu'un objet s'approche de la poignée P. Ainsi par exemple, le signal S détecté lors de la première séquence SQ1 sera supérieur au signal S du même objet détecté lors de la troisième séquence SQ3. Et le signal S détecté lors de la quatrième séquence SQ4 sera le plus faible.

Dans un autre mode de réalisation non limitatif, l'organe de détection est non capacitif ; dans un exemple non limitatif c'est un capteur optique. Dans ce cas, le signal S est un flux optique.

Dans un mode de réalisation non limitatif, l'organe de détection effectue lui-même les comparaisons entre le signal mesuré S et les valeurs seuils TH.

Ainsi, l'invention décrite présente notamment les avantages suivants :
- elle permet de détecter la présence de la pluie ou d'une main qui s'approche lors de la première séquence SQ1 ;
- elle permet de détecter l'arrêt de la pluie lors de la deuxième séquence SQ2 ;
- elle permet de détecter si la main a touché ou non la poignée (réelle intention) lors de la troisième séquence SQ3 et de la quatrième séquence SQ4 ;
- elle permet de faire la différence entre une goutte de pluie qui ruisselle sur la poignée et une main en s'affranchissant des signaux relatifs aux gouttes de pluie grâce au deuxième niveau de sensibilité SEN2 : elle permet ainsi d'éviter les fausses détections (goutte de pluie assimilée à une main en contact avec la poignée), et dans le même temps, elle permet d'initier au plus vite l'interrogation mains-libres pour éviter les « effets de mur » ;
- ainsi, elle permet d'avoir un bon compromis (niveau haute sensibilité SEN1 et niveau basse sensibilité SEN2) pour éviter les fausses détections et les « effets de mur » ;
- elle permet d'éviter de faire des interrogations mains-libres quand il y a des gouttes de pluies lorsque l'organe de détection est placé sur le deuxième niveau de sensibilité SEN2 et elle évite ainsi que le système mains-libres ne soit trop consommateur d'énergie.

## Revendications

1. Système d'accès mains-libres (SYS) à un véhicule automobile (V) comprenant :
- un organe de commande (COM) disposé dans le véhicule automobile (V) ;
- un organe de détection (CAPT) disposé dans une poignée d'ouvrant (P) du véhicule automobile (V), ledit organe de détection :
- étant connecté audit organe de commande (COM) ;
- étant apte à mesurer un signal (S) représentatif de l'approche d'une main (M) ;
- un niveau de sensibilité (SEN) pour lequel est définie une valeur seuil (TH) correspondante ;
- ledit organe de commande (COM) étant apte à lancer une interrogation mains-libres auprès du véhicule automobile (V) lorsque le signal (S) mesuré dépasse la valeur seuil (TH) correspondant au niveau de sensibilité (SEN) ;
le système mains-libres (SYS) comprenant au moins deux niveaux de sensibilité (SEN1, SEN2), un premier niveau de sensibilité haute (SEN1), et un deuxième niveau de sensibilité basse (SEN2), l'organe de commande (COM) étant également apte à modifier le niveau de sensibilité (SEN1, SEN2) du système mains-libres (SYS) en réponse à une séquence d'événements prédéterminée (SQ), l'organe de commande (COM) faisant passer le système mains-libres (SYS) du premier niveau de sensibilité haute (SEN1) au deuxième niveau de sensibilité basse (SEN2), en présence de la séquence (SQ1) :
- ledit système mains-libres (SYS) est disposé sur un premier niveau de sensibilité haute (SEN1) ;
- détection du signal (S) supérieur à une première valeur seuil (TH1) ;
**caractérisé en ce que** en présence de la séquence (SQ4) :
- détection du franchissement de la deuxième valeur seuil (TH2),
- détection du franchissement d'une troisième valeur seuil (TH3), l'organe de commande (COM) fait passer le système mains-libres (SYS) du deuxième niveau de sensibilité basse (SEN2) au premier niveau de sensibilité haute (SEN1).

2. Système d'accès mains-libres (SYS) selon la revendication 1, selon lequel le passage du premier niveau de sensibilité haute (SEN1) au deuxième niveau de sensibilité basse (SEN2) est effectué si un premier temps déterminé (Tm1) a été dépassé sans que le signal mesuré (S) ne dépasse une troisième valeur seuil (TH3).

3. Système d'accès mains-libres (SYS) selon la revendication 1 ou la revendication 2, selon lequel en présence de la séquence (SQ2) :
- dépassement d'un deuxième temps prédéterminé (Tm2) sans franchissement de la première valeur seuil (TH1) ;
l'organe de commande (COM) fait passer le système mains-libres (SYS) du deuxième niveau de sensibilité basse (SEN2) au premier niveau de sensibilité haute (SEN1).

4. Système d'accès mains-libres (SYS) selon la revendication 1 ou la revendication 2, selon lequel en présence de la séquence (SQ3) :
- détection du franchissement de la deuxième valeur seuil (TH2),
- dépassement d'un premier temps prédéterminé (Tm1) sans franchissement d'une troisième valeur seuil (TH3) ;
l'organe de commande (COM) laisse le système mains-libres (SYS) au deuxième niveau de sensibilité basse (SEN2).

5. Système d'accès mains-libres (SYS) selon la revendication 1 ou la revendication 2, selon lequel l'organe de commande (COM) est en outre apte à effectuer un déverrouillage du véhicule automobile (V).

6. Système d'accès mains-libres (SYS) selon l'une quelconque des revendications précédentes, selon lequel la première valeur seuil (TH1) correspond à une première distance (d1) par rapport à la poignée d'ouvrant (P), la deuxième valeur seuil (TH2) correspond à une deuxième distance (d2) par rapport à la poignée d'ouvrant (P), la première distance (d1) étant supérieure à la deuxième distance (d2).

7. Système d'accès mains-libres (SYS) selon l'une quelconque des revendications précédentes 4 à 6, selon lequel la troisième valeur seuil (TH3) correspond à une troisième distance (d3) par rapport à la poignée d'ouvrant (P) et est inférieure ou égale à la deuxième distance (d2).

8. Système d'accès mains-libres (SYS) selon l'une quelconque des revendications précédentes, selon lequel ledit organe de détection (CAPT) est composé d'une unique électrode adaptée pour recouvrir une face intérieure de ladite poignée d'ouvrant (P) du véhicule automobile (V).

9. Système d'accès mains-libres (SYS) selon l'une quelconque des revendications précédentes, selon lequel le signal (S) est représentatif d'une mesure de capacité.

10. Système d'accès mains-libres (SYS) selon l'une quelconque des revendications précédentes, selon lequel le premier niveau de sensibilité haute (SEN1) correspond à un signal (S) de faible valeur (Sf) et le deuxième niveau de sensibilité basse (SEN2) correspond à un signal (S) de forte valeur (SF).

11. Système d'accès mains-libres (SYS) selon l'une quelconque des revendications précédentes, selon lequel la première valeur seuil (TH1) est inférieure à la deuxième valeur seuil (TH2).

12. Système d'accès mains-libres (SYS) selon l'une quelconque des revendications précédentes 4 à 11, selon lequel la deuxième valeur seuil (TH2) est inférieure ou égale à la troisième valeur seuil (TH3).

13. Système d'accès mains-libres (SYS) selon l'une quelconque des revendications précédentes, selon lequel ledit organe de commande (COM) est en outre apte à réveiller des calculateurs (CAC) du véhicule automobile (V) lorsque le signal mesuré (S) dépasse la valeur de seuil (TH1, TH2) correspondant au niveau de sensibilité sur lequel est disposé ledit système mains-libres (SYS).

14. Système d'accès mains-libres (SYS) selon la revendication précédente 14, selon lequel ledit organe de commande (COM) est en outre apte à éteindre lesdits calculateurs (CAC) si un troisième temps prédéterminé (Tm3) est dépassé sans franchissement de ladite troisième valeur seuil (TH3).

## Patentansprüche

1. Freihandzugangssystem (SYS) zu einem Kraftfahrzeug (V), umfassend:
- eine Steuereinrichtung (COM), die im Kraftfahrzeug (V) angeordnet ist;
- eine Detektionseinrichtung (CAPT), die in einem Türgriff (P) des Kraftfahrzeugs (V) angeordnet ist, wobei die Detektionseinrichtung:
- mit der Steuereinrichtung (COM) verbunden ist;
- geeignet ist, ein Signal (S) zu messen, das für das Annähern einer Hand (M) repräsentativ ist;
- eine Empfindlichkeitsstufe (SEN), für die ein entsprechender Schwellenwert (TH) definiert ist;
- wobei die Steuereinrichtung (COM) geeignet ist, eine Freihandabfrage beim Kraftfahrzeug (V) zu starten, wenn das gemessene Signal (S) den der Empfindlichkeitsstufe (SEN) entsprechenden Schwellenwert (TH) überschreitet; wobei das Freihandsystem (SYS) mindestens zwei Empfindlichkeitsstufen (SEN1, SEN2) umfasst, eine erste hohe Empfindlichkeitsstufe (SEN1) und eine zweite niedrige Empfindlichkeitsstufe (SEN2), wobei die Steuereinrichtung (COM) auch geeignet ist, die Empfindlichkeitsstufe (SEN1, SEN2) des Freihandsystems (SYS) als Antwort auf eine vorgegebene Ereignissequenz (SQ) zu ändern, wobei die Steuereinrichtung (COM) das Freihandsystem (SYS) von der ersten hohen Empfindlichkeitsstufe (SEN1) zur zweiten niedrigen Empfindlichkeitsstufe (SEN2) wechseln lässt beim Vorliegen der Sequenz (SQ1):
- das Freihandsystem (SYS) ist auf einer ersten hohen Empfindlichkeitsstufe (SEN1) angeordnet;
- Detektieren des Signals (S), das größer als ein erster Schwellenwert (TH1) ist;
**dadurch gekennzeichnet, dass** bei Vorliegen der Sequenz (SQ4) :
- Detektieren des Überschreitens des zweiten Schwellenwerts (TH2),
- Detektieren des Überschreitens eines dritten Schwellenwerts (TH3),
die Steuereinrichtung (COM) das Freihandsystem (SYS) von der zweiten niedrigen Empfindlichkeitsstufe (SEN2) zur ersten hohen Empfindlichkeitsstufe (SEN1) wechseln lässt.

2. Freihand-Zugangssystem (SYS) nach Anspruch 1, bei dem das Wechseln von der ersten hohen Empfindlichkeitsstufe (SEN1) zur zweiten niedrigen Empfindlichkeitsstufe (SEN2) durchgeführt wird, wenn eine erste vorgegebene Zeit (Tm1) überschritten wurde, ohne dass das gemessene Signal (S) den dritten Schwellenwert (TH3) überschreitet.

3. Freihand-Zugangssystem (SYS) nach Anspruch 1 oder Anspruch 2, bei dem bei Vorliegen der Sequenz (SQ2):
- Überschreiten einer zweiten vorgegebenen Zeit (Tm2) ohne Überschreiten des ersten Schwellenwerts (TH1);
die Steuereinrichtung (COM) das Freihandsystem (SYS) von der zweiten niedrigen Empfindlichkeitsstufe (SEN2) zur ersten hohen Empfindlichkeitsstufe (SEN1) wechseln lässt.

4. Freihandzugangssystem (SYS) nach Anspruch 1 oder Anspruch 2, bei dem bei Vorliegen der Sequenz (SQ3):
- Detektieren des Überschreitens des zweiten Schwellenwerts (TH2),
- Überschreiten einer ersten vorgegebenen Zeit (Tm1) ohne Überschreiten eines dritten Schwellenwerts (TH3); die Steuereinrichtung (COM) das Freihandsystem (SYS) auf der zweiten niedrigen Empfindlichkeitsstufe (SEN2) lässt.

5. Freihandzugangssystem (SYS) nach Anspruch 1 oder Anspruch 2, bei dem die Steuereinrichtung (COM) ferner geeignet ist, eine Entriegelung des Kraftfahrzeugs (V) durchzuführen.

6. Freihandzugangssystem (SYS) nach einem der vorhergehenden Ansprüche, bei dem der erste Schwellenwert (TH1) einem ersten Abstand (d1) vom Türgriff (P) entspricht, der zweite Schwellenwert (TH2) einem zweiten Abstand (d2) vom Türgriff (P) entspricht, wobei der erste Abstand (d1) größer als der zweite Abstand (d2) ist.

7. Freihandzugangssystem (SYS) nach einem der Ansprüche 4 bis 6, bei dem der dritte Schwellenwert (TH3) einem dritten Abstand (d3) vom Türgriff (P) entspricht und kleiner als oder gleich dem zweiten Abstand (d2) ist.

8. Freihandzugangssystem (SYS) nach einem der vorhergehenden Ansprüche, bei dem die Detektionseinrichtung (CAPT) aus einer einzigen Diode besteht, die geeignet ist, eine Innenseite des Türgriffs (P) des Kraftfahrzeugs (V) zu bedecken.

9. Freihandzugangssystem (SYS) nach einem der vorhergehenden Ansprüche, bei dem das Signal (S) repräsentativ für eine Kapazitätsmessung ist.

10. Freihandzugangssystem (SYS) nach einem der vorhergehenden Ansprüche, bei dem die erste hohe Empfindlichkeitsstufe (SEN1) einem Signal (S) von geringem Wert (Sf) entspricht und die zweite niedrige Empfindlichkeitsstufe (SEN2) einem Signal (S) von hohem Wert (SF) entspricht.

11. Freihandzugangssystem (SYS) nach einem der vorhergehenden Ansprüche, bei dem der erste Schwellenwert (TH1) kleiner als der zweite Schwellenwert (TH2) ist.

12. Freihandzugangssystem (SYS) nach einem der Ansprüche 4 bis 11, bei dem der zweite Schwellenwert (TH2) kleiner als oder gleich dem dritten Schwellenwert (TH3) ist.

13. Freihandzugangssystem (SYS) nach einem der vorhergehenden Ansprüche, bei dem die Steuereinrichtung (COM) ferner geeignet ist, Rechner (CAC) des Fahrzeugs (V) zu wecken, wenn das gemessene Signal (S) den Schwellenwert (TH1, TH2) überschreitet, welcher der Empfindlichkeitsstufe entspricht, auf der das Freihandsystem (SYS) angeordnet ist.

14. Freihandzugangssystem (SYS) nach dem vorhergehenden Anspruch 14, bei dem die Steuereinrichtung (COM) ferner geeignet ist, die Rechner (CAC) auszuschalten, wenn eine dritte vorgegebene Zeit (Tm3) ohne Überschreiten des dritten Schwellenwerts (TH3) überschritten wird.

## Claims

1. Hands-free access system (SYS) for a motor vehicle (V) comprising:
- a control member (COM) placed in the motor vehicle (V);
- a detection member (CAPT) placed in a panel handle (P) of the motor vehicle (V), said detection member:
- being connected to said control member (COM);
- being able to measure a signal (S) representative of the approaching of a hand (M) ;
- a sensitivity level (SEN) for which a corresponding threshold value (TH) is defined;
- said control member (COM) being able to launch a hands-free interrogation with the motor vehicle (V) when the measured signal (S) exceeds the threshold value (TH) corresponding to the sensitivity level (SEN);
the hands-free system (SYS) comprising at least two sensitivity levels (SEN1, SEN2), a first high sensitivity level (SEN1), and a second low sensitivity level (SEN2), the control member (COM) being also able to modify the sensitivity level (SEN1, SEN2) of the hands-free system (SYS) in response to a predetermined sequence of events (SQ), the control member (COM) causing the hands-free system (SYS) to switch from the first high sensitivity level (SEN1) to the second low sensitivity level (SEN2), in the presence of the sequence (SQ1) :
- said hands-free system (SYS) is placed at a first high sensitivity level (SEN1);
- detection of the signal (S) greater than a first threshold value (TH1);
**characterized in that** in the presence of the sequence (SQ4):
- detection of the crossing of the second threshold value (TH2),
- detection of the crossing of a third threshold value (TH3),
the control member (COM) causes the hands-free system (SYS) to switch from the second low sensitivity level (SEN2) to the first high sensitivity level (SEN1).

2. Hands-free access system (SYS) according to Claim 1, according to which the switch from the first high sensitivity level (SEN1) to the second low sensitivity level (SEN2) is performed if a first determined time (Tm1) has been exceeded without the measured signal (S) exceeding a third threshold value (TH3) .

3. Hands-free access system (SYS) according to Claim 1 or Claim 2, according to which in the presence of the sequence (SQ2):
- exceeding of a second predetermined time (Tm2) without crossing of the first threshold value (TH1);
the control member (COM) causes the hands-free system (SYS) to switch from the second low sensitivity level (SEN2) to the first high sensitivity level (SEN1).

4. Hands-free access system (SYS) according to Claim 1 or Claim 2, according to which in the presence of the sequence (SQ3):
- detection of the crossing of the second threshold value (TH2),
- exceeding of a first predetermined time (Tm1) without crossing of a third threshold value (TH3);
the control member (COM) leaves the hands-free system (SYS) at the second low sensitivity level (SEN2).

5. Hands-free access system (SYS) according to Claim 1 or Claim 2, according to which the control member (COM) is furthermore able to perform an unlocking of the motor vehicle (V).

6. Hands-free access system (SYS) according to any one of the preceding claims, according to which the first threshold value (TH1) corresponds to a first distance (d1) with respect to the panel handle (P), the second threshold value (TH2) corresponds to a second distance (d2) with respect to the panel handle (P), the first distance (d1) being greater than the second distance (d2).

7. Hands-free access system (SYS) according to any one of the preceding Claims 4 to 6, according to which the third threshold value (TH3) corresponds to a third distance (d3) with respect to the panel handle (P) and is less than or equal to the second distance (d2).

8. Hands-free access system (SYS) according to any one of the preceding claims, according to which said detection member (CAPT) is composed of a single electrode adapted for covering an interior face of said panel handle (P) of the motor vehicle (V).

9. Hands-free access system (SYS) according to any one of the preceding claims, according to which the signal (S) is representative of a capacitance measurement.

10. Hands-free access system (SYS) according to any one of the preceding claims, according to which the first high sensitivity level (SEN1) corresponds to a signal (S) of small value (Sf) and the second low sensitivity level (SEN2) corresponds to a signal (S) of large value (SF).

11. Hands-free access system (SYS) according to any one of the preceding claims, according to which the first threshold value (TH1) is less than the second threshold value (TH2).

12. Hands-free access system (SYS) according to any one of the preceding Claims 4 to 11, according to which the second threshold value (TH2) is less than or equal to the third threshold value (TH3).

13. Hands-free access system (SYS) according to any one of the preceding claims, according to which said control member (COM) is furthermore able to wake up computers (CAC) of the motor vehicle (V) when the measured signal (S) exceeds the threshold value (TH1, TH2) corresponding to the sensitivity level at which said hands-free system (SYS) is placed.

14. Hands-free access system (SYS) according to the preceding Claim 14, according to which said control member (COM) is furthermore able to turn off said computers (CAC) if a third predetermined time (Tm3) is exceeded without crossing of said third threshold value (TH3) .
